# EUROPEAN PATENT SPECIFICATION

(11) **EP 1 800 935 B1**
(45) Date of publication and mention of the grant of the patent: **09.03.2016**
(21) Application number: 06026802.6
(22) Date of filing: 22.12.2006
(51) Int. Cl.: B60L 3/02, B66F 9/075, B66F 9/20, B66F 9/24

(54) **Control system and method for electric-powered forklifts**
Vorrichtung und Verfahren der Steuerung für elektrisch angetriebenen Gabelstapler
Système et procédé de contrôle pour chariots élévateurs à fourche électriques

(30) Priority: 23.12.2005 KR 20050128946
(43) Date of publication of application: 27.06.2007
(73) Proprietor: Doosan Corporation, Seoul (KR)
(72) Inventor: Hwang, Joon Ha, Seoul (KR)
(74) Representative: Sparing Röhl Henseler

(56) References cited:
- EP-A2- 1 031 487
- DE-A1- 19 752 022
- JP-A- 61 154 405
- JP-A- 2003 226 499

## Description

The present invention relates, in general, to a control system and method for an electric-powered forklift, more particularly, to a control system and method for an electric-powered forklift, which can automatically brake the forklift without requiring a driver to perform a manual operation.

The features of the preambles of claims 1 and 7 are known from JP 2003 226499 A.

According to JP 61 154405 A regenerative braking of the travel motor is a known practice for forklifts.

An electric-powered forklift is a vehicle using the electricity of a battery as a power source. Such an electric-powered forklift includes a travel motor for enabling the vehicle to travel, and an actuation unit motor for driving an actuation unit, such as a lift cylinder or tilt cylinder.

Further, the electric-powered forklift includes a travel brake unit for braking the vehicle during traveling, and a parking brake unit for keeping the vehicle in a stationary state when parked.

The travel brake unit is a multi-plate brake that performs braking by pressing a disc installed on an axle shaft using a friction plate, and that operates when a driver steps on a brake pedal installed near a driver's seat, thus braking the vehicle during traveling.

The parking brake unit is a band-type parking brake that performs braking by pressurizing the circumferential portion of a drum, installed on an axle shaft, using a band, and that operates when a driver operates a parking lever or the like, installed near a driver's seat, thus keeping the vehicle in a stationary state when parked.

However, the conventional electric-powered forklift is disadvantageous in that, whenever traveling stops and an actuation unit is operated, the vehicle must be braked by manipulating the brake pedal or parking lever.

That is, in general, when traveling stops and goods are loaded or unloaded, the vehicle is braked by manipulating the travel brake unit or parking brake unit to stabilize the vehicle, and thereafter performs work. In particular, when loading or unloading goods in an inclined place, the vehicle may be pushed downwards. Accordingly, after the travel brake unit or the parking brake unit is manipulated to brake the vehicle, work is performed. Therefore, the conventional electric-powered forklift is very inconvenient in that the travel brake pedal or parking lever must be manually manipulated whenever traveling operation stops and work is performed.

Accordingly, the present invention has been made keeping in mind the above problems occurring in the prior art, and an object of the present invention is to provide a control system and method for an electric-powered forklift, which can maximize the convenience and safety of a driver even when the vehicle is braked in order to perform work.

This object is solved according to the features of claims 1 and 7, respectively.

The above and other objects, features and other advantages of the present invention will be more clearly understood from the following detailed description taken in conjunction with the accompanying drawings, in which:
FIG. 1 is a block diagram showing a first control system for an electric-powered forklift;
FIG. 2 is a flowchart showing a control method for an electric-powered forklift using the control system according to FIG. 1;
FIG. 3 is a block diagram showing a second control system for an electric-powered forklift;
FIG. 4 is a flowchart showing a control method for an electric-powered forklift using the control system according to FIG. 3;
FIG. 5 is a block diagram showing a first embodiment of a control system for an electric-powered forklift according to the present invention;

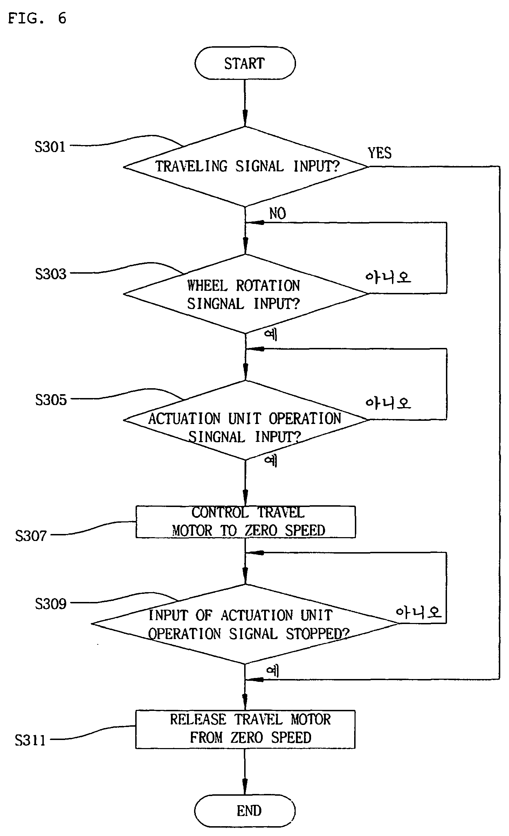

FIG. 6 is a flowchart showing a control method for an electric-powered forklift using the control system according to the first embodiment of the present invention;
FIG. 7 is a block diagram showing a second embodiment of a control system for an electric-powered forklift according to the present invention; and
FIG. 8 is a flowchart showing a control method for an electric-powered forklift using the control system according to the second embodiment of the present invention.

Reference now should be made to the drawings, in which the same reference numerals are used throughout the different drawings to designate the same or similar components.

Hereinafter, embodiments of a control system and method for an electric-powered forklift according to the present invention will be described in detail with reference to the attached drawings.

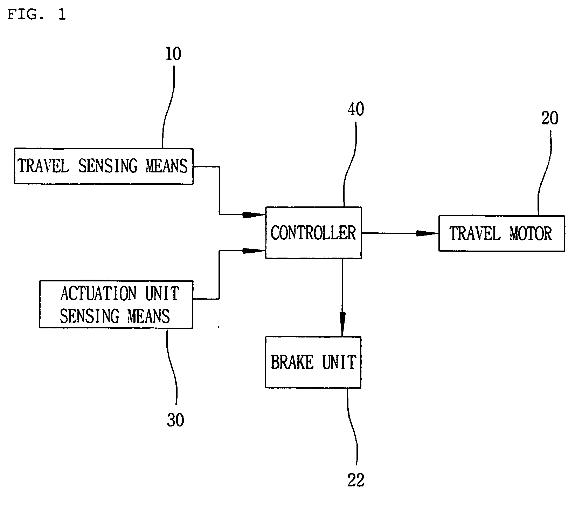

FIG. 1 illustrates a first control system for an electric-powered forklift.

The control system according to FIG. 1 includes a travel sensing means 10 for sensing whether a vehicle is traveling.

The travel sensing means 10 is a sensor for sensing whether a driver is pressing an accelerator pedal (not shown), and can be implemented using a rotation sensor for sensing the slope of the accelerator pedal, or a pressure sensor for sensing the distance that the accelerator pedal is pressed.

Such a travel sensing means 10 senses that the vehicle is currently traveling by outputting a traveling signal when the driver steps on the accelerator pedal.

In another example, the travel sensing means 10 can be implemented using a current sensor for sensing the flow of current in a travel motor 20. The current sensor senses the flow of current in the travel motor 20, thus sensing whether the travel motor 20 is currently being driven and the vehicle is traveling.

In a further example, the travel sensing means 10 can be implemented using a forward/backward lever position sensor for sensing the position of a forward/backward lever. The forward/backward lever position sensor senses the position of the forward/backward lever, which is moved to a forward position or a backward position, thus sensing whether the vehicle is currently traveling.

Referring to FIG. 1 again, the control system includes an actuation unit sensing means 30 for sensing whether an actuation unit is currently operating.

The actuation unit sensing means 30 is implemented using a rotation sensor for sensing the rotation of the shaft of an actuation unit motor (not shown), and is operated to sense the rotation of the actuation unit motor, thus sensing whether the vehicle is currently performing work. Preferably, the rotation sensor is implemented using a rotary encoder installed on the shaft of the actuation unit motor.

In another example, the actuation unit sensing means 30 can be implemented using a hydraulic oil sensor for sensing the flow of hydraulic oil flowing into an actuation unit. The hydraulic oil sensor senses the flow of hydraulic oil, flowing into the actuation unit, thus sensing whether an actuation unit is currently operating, and consequently sensing whether the vehicle is currently performing work.

Referring to FIG. 1 again, the control system includes a controller 40 for controlling the travel motor 20 in response to signals output from the travel sensing means 10 and the actuation unit sensing means 30.

The controller 40 is provided with a microprocessor, and is operated to determine that the vehicle has currently stopped traveling and is only performing work if a signal is input from the actuation unit sensing means 30 when no signal is input from the travel sensing means 10, thus controlling the vehicle so that the vehicle is actually in a stopped state, that is, a "zero speed" state. Such a "zero speed" state can be realized by controlling the travel motor 20, or by driving a brake unit 22. The brake unit of the control system is operated by oil pressure, and such a zero speed state is maintained by causing oil pressure to be automatically applied to the brake unit 22 by the controller 40.

The "zero speed" state is released when a traveling signal is input from the travel sensing means 10 or when the input of a sensed signal from the actuation unit sensing means 30 is stopped. If a signal is input from the actuation unit sensing means 30 again after the "zero speed" state is released in this way, the vehicle is controlled again so that it is in the "zero speed" state. Of course, even in this case, the state in which no traveling signal is input from the travel sensing means 10 must be realized.

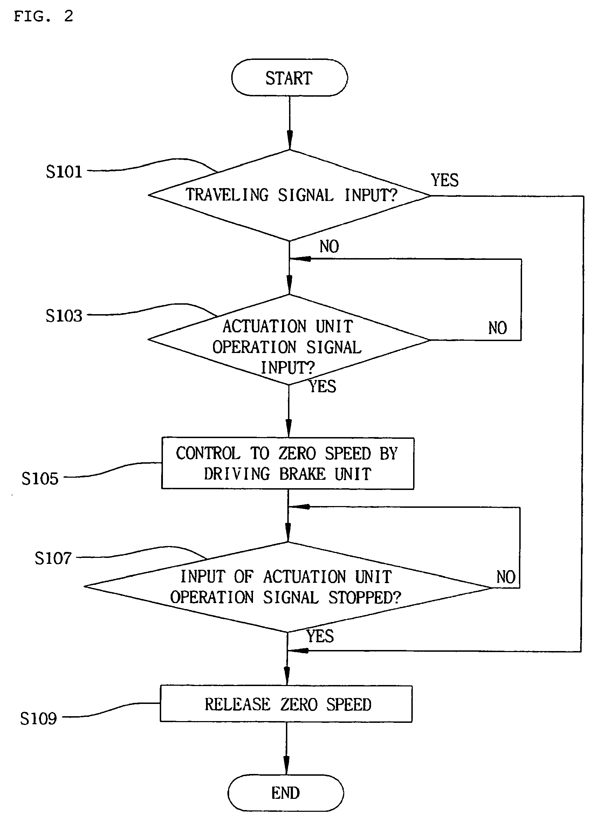

Next, a control method for an electric-powered forklift using the control system according to FIG. 1 is described in detail with reference to FIGS. 1 and 2.

First, whether a traveling signal is input from the travel sensing means 10 is sensed at step S101. As a result of the sensing, if no traveling signal is found to be input, whether an actuation unit operation signal is input from the actuation unit sensing means 30 is sensed at step S103.

As a result of the sensing, if the actuation unit operation signal is found to be input, the controller 40 determines that the vehicle has currently stopped traveling and is only performing work, thus driving the brake unit 22, and consequently controlling the vehicle so that it is in a "zero-speed" state at step S105. Therefore, the vehicle can stably perform the operation of unloading or loading goods.

Meanwhile, when a traveling signal is input from the travel sensing means 10 at step S101, or when the input of an actuation unit operation signal from the actuation unit sensing means 30 is stopped at step S107 while the vehicle is in the "zero speed" state, the controller 40 releases the brake unit so that the vehicle is released from the zero speed state at step S109.

In the control method according to FIG. 2, since the vehicle is automatically stopped and is maintained in the "zero speed" state while performing work, the position of the vehicle can be automatically and stably maintained. Therefore, the control method can maximize the driver's convenience, unlike control methods, which force the driver to manually brake the vehicle.

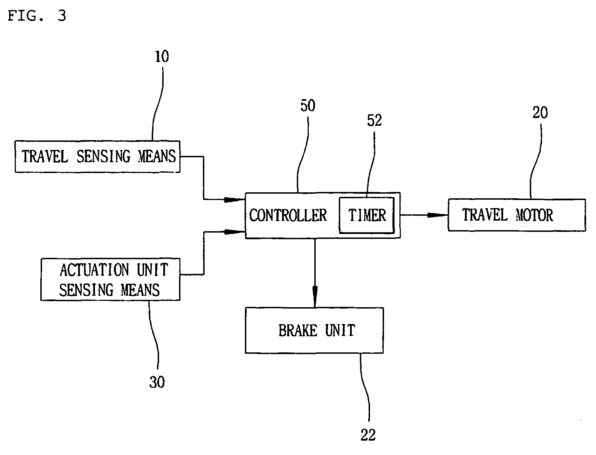

Next, FIG. 3 illustrates a second control system for an electric-powered forklift.

The control system according to FIG. 3 includes a controller 50 for processing signals output from a travel sensing means 10 and an actuation unit sensing means 30, the controller 50 including a timer 52.

The timer 52 counts the time for which the input of a sensed signal is stopped when the input of the sensed signal from the actuation unit sensing means 30 is stopped.

Further, when the time counted by the timer 52, that is, the time for which the input of the sensed signal is stopped, exceeds a preset time, the controller 50 determines that the actuation unit is not currently being used, thus releasing the vehicle from the "zero speed" state. The preset time stored in the controller 50 is preferably about five minutes.

Such a controller 50 differs from that of the first control system only in the above-described way, and the construction and operation thereof is otherwise identical to the first control system. Therefore, a detailed description thereof is omitted.

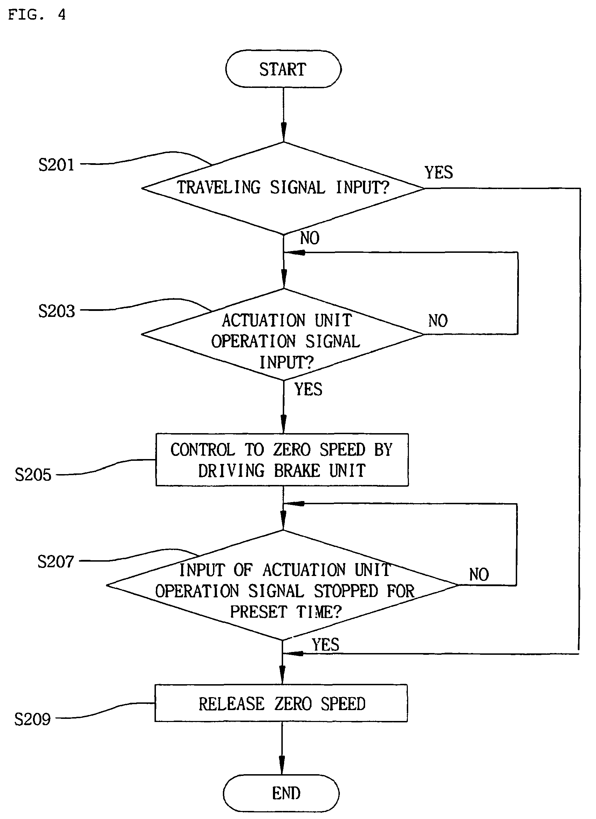

Next, a control method for an electric-powered forklift using the control system according to FIG. 3 is described with reference to FIGS. 3 and 4.

First, whether a traveling signal is input from the travel sensing means 10 is sensed at step S201. In this case, if no traveling signal is found to be input, whether an actuation unit operation signal is input from the actuation unit sensing means 30 is sensed at step S203.

If an actuation unit operation signal is found to be input as a result of the sensing, the controller 50 determines that the vehicle has currently stopped traveling and is only performing work, thus driving the brake unit 22, and consequently controlling the vehicle so that it is in a "zero speed" state at step S205. Accordingly, the vehicle can stably perform the operation of unloading or loading goods.

Meanwhile, when a traveling signal is input from the travel sensing means 10 at step S201 or when the input of an actuation unit operation signal from the actuation unit sensing means 30 is stopped at step S207 while the vehicle is in the "zero speed" state, the controller 50 releases the brake unit 22, thus immediately releasing the vehicle from the zero speed state at step S209.

Meanwhile, after the travel motor 20 is released from the "zero speed" state, if the actuation unit operation signal is input again from the actuation unit sensing means 30 at step S203, the vehicle is controlled again so that it is in the "zero speed" state at step S205. Of course, even in this case, the state in which no traveling signal is input from the travel sensing means 10 must be realized.

Accordingly, the control method according to FIG. 4 uses a scheme for releasing the "zero speed" state after a preset time has elapsed even if the input of the actuation unit operation signal from the actuation unit sensing means 30 is stopped, thus preventing the braked state of the vehicle from being released even when the driver of the vehicle temporarily stops the operation of the actuation unit.

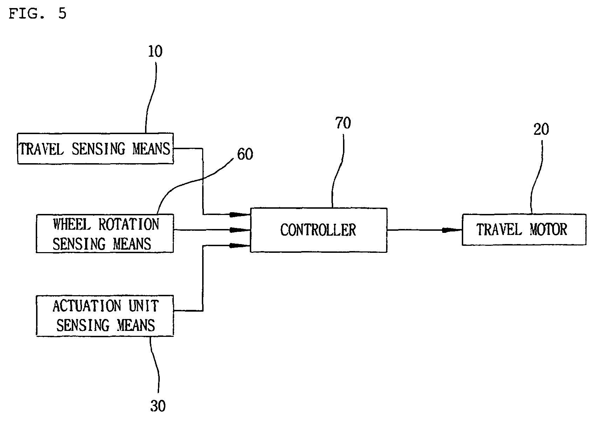

Next, FIG. 5 illustrates a first embodiment of a control system for an electric-powered forklift according to the present invention.

The control system according to the first embodiment further includes a wheel rotation sensing means 60 for sensing whether the wheel of the vehicle is rotating.

The wheel rotation sensing means 60 is implemented using a rotation sensor for sensing the rotation of an axle shaft (not shown) connected to the wheel of the vehicle. In another example, the wheel rotation sensing means 60 can be implemented using a rotation sensor for sensing the rotation of the shaft of the travel motor 20 connected to the wheel.

Such a wheel rotation sensing means 60 senses the rotation of the axle shaft or the travel motor 20, thus sensing whether the vehicle is currently rotating. In particular, the wheel rotation sensing means 60 senses whether the wheel is performing idle rotation regardless of the driving force of the travel motor 20. Preferably, a rotary encoder is used as the rotation sensor.

Further, the control system according to the first embodiment of the present invention includes a controller 70 for controlling the travel motor 20 in response to signals output from the travel sensing means 10, the actuation unit sensing means 30 and the wheel rotation sensing means 60.

If signals are simultaneously input from the actuation unit sensing means 30 and the wheel rotation sensing means 60 while no signal is input from the travel sensing means 10, the controller determines that the vehicle is not currently traveling and is performing work while being pushed downwards in an inclined place, thus controlling the travel motor 20.

The travel motor 20 is controlled so that the "zero speed" state thereof is maintained by the application of predetermined reverse current. That is, when the vehicle is moved by a load while no signal is input from the travel sensing means 10, the reverse current is applied so that reversal rotary power is generated at the travel motor 20 in a reverse direction relative to the direction in which the vehicle is moved. Here, the reversal rotary power can have any intensity enabling the vehicle to be maintained in the "zero speed" state. However, if the wheel is intended to rotate in a reverse direction due to the excessively high intensity of reverse current, an operation of lifting goods, etc., reverse current is applied in a reverse direction relative to that direction, thus maintaining the vehicle in the "zero speed" state. The application of such reverse current is alternately performed, thus the vehicle can be maintained in a stopped state in actuality.

Meanwhile, as described above, when the travel motor 20 can be controlled, the control system can be constructed so that the brake is automatically driven if the driver does not conduct a traveling operation even during the traveling of the vehicle. That is, even during traveling, the control system can increase the convenience of the driver of the vehicle. In this case, it is preferable that, if the condition of "zero speed" is satisfied after the vehicle stops traveling, control for "zero speed" be successively started. When the vehicle is fully stopped by the automatic brake function in this way, the stopped state of the vehicle cannot be maintained if the actuation unit is not operated immediately after the vehicle has stopped. In particular, when the vehicle is parked in an inclined place, there is a probability that the vehicle will move due to the load thereof, thus causing an accident. Such a problem can be prevented by controlling the travel motor 20 to remain in the same state as the above-described "zero speed" state even if the actuation unit is not driven for a certain period of time after the vehicle has stopped. Such an advantage can be easily achieved when the timer, described in the above second control system, can be used together with the function.

Meanwhile, if a traveling signal is input from the travel sensing means 10 while the travel motor 20 is in the "zero speed" state, the controller 70 drives the travel motor 20 normally.

Further, if the input of the sensed signal from the actuation unit sensing means 30 is stopped after the travel motor 20 has been controlled to be in the "zero speed" state, the controller 70 determines that the actuation unit is not currently being used, and thus immediately releases the travel motor 20 from the "zero speed" state.

Further, if a signal is input again from the actuation unit sensing means 30 after the travel motor 20 has been released from the "zero speed" state, the controller 70 maintains the travel motor 20 in the "zero speed" state again. Of course, even in this case, a state in which no traveling signal is input from the travel sensing means 10 must be realized.

Next, a control method for an electric-powered forklift using the control system according to the first embodiment of the present invention is described in detail.

First, whether a traveling signal is input from the travel sensing means 10 is sensed at step S301. In this case, if no traveling signal is found to be input, whether a wheel rotation signal is input from the wheel rotation sensing means 60 is sensed at step S303. If the wheel rotation signal is found to be input as a result of the sensing, whether an actuation unit operation signal is input from the actuation unit sensing means 30 is sensed at step S305.

If an actuation unit operation signal is found to be input as a result of the sensing, the controller 70 determines that the vehicle currently stops traveling and is performing work while being pushed downwards in an inclined place, and thus controls the travel motor 20 so that it is in a "zero speed" state at step S307.

In this state, since the travel motor 20 is maintained in the zero speed state, forward/backward rotation of the travel motor is prevented. Accordingly, since the forward/backward rotation of the travel motor 20 can be prevented, the vehicle is maintained in its braked state while the motion thereof is restrained. Therefore, the vehicle can be stably maintained without being pushed downwards even in an inclined place, thus performing the operation of unloading or loading goods.

Meanwhile, if a traveling signal is found to be input from the travel sensing means 10 after the travel motor 20 has been controlled to remain in the "zero speed" state at step S301, the controller 70 immediately releases the travel motor 20 from the zero speed state at step S311.

Further, the controller 70 senses whether the input of the actuation unit operation signal from the actuation unit sensing means 30 is stopped after the travel motor 20 has been controlled to be in the "zero speed" state at step S309.

If the input of the actuation unit operation signal is found to be stopped as a result of the sensing, the controller 70 determines that the actuation unit is not currently being used, thus immediately releasing the travel motor 20 from the "zero speed" state at step S311.

In this case, since the travel motor 20 is released from the "zero speed" state, the travel motor 20 can be freely rotated forward or backward, and thus travel forward or backward.

Meanwhile, if an actuation unit operation signal and a wheel rotation signal are input again from the actuation unit sensing means 30 and the wheel rotation sensing means 60, respectively, after the travel motor 20 has been released from the "zero speed" state, at steps S303 and S305, the travel motor 20 is controlled again so that it is in the "zero speed" state at step S307. Of course, even in this case, the state in which no traveling signal is input from the travel sensing means 10 must be realized.

In the control method according to the first embodiment of the present invention, if the vehicle is performing work in an inclined place, the travel motor 20 is automatically maintained at the "zero speed" state to stop the vehicle, so that the vehicle can perform work while maintaining a stable state even in an inclined place.

Further, since the vehicle automatically stops without requiring a driver to perform a manual operation, the inconvenience of forcing the driver to manipulate a travel brake unit or parking brake unit when performing work in an inclined place can be eliminated, thus being very convenient for the driver.

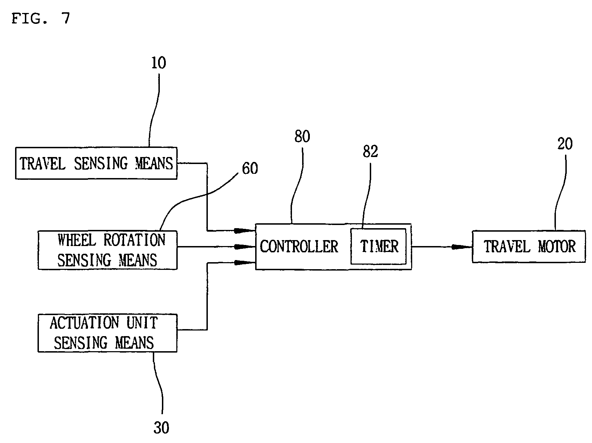

Next, FIG. 7 illustrates a second embodiment of a control system for an electric-powered forklift according to the present invention.

The control system according to the second embodiment includes a controller 80 for processing signals input from a travel sensing means 10, an actuation unit sensing means 30, and a wheel rotation sensing means 60, the controller 80 including a timer 82.

The timer 82 counts the time for which the input of a sensed signal from the actuation unit sensing means 30 is stopped when the input of the sensed signal is stopped.

Further, when the time counted by the timer 52, that is, the time for which the input of the sensed signal is stopped, exceeds a preset time, the controller 50 determines that the actuation unit is not being currently used, thus releasing the travel motor 20 from the "zero speed" state. The preset time stored in the controller 50 is preferably about five minutes.

Such a controller 80 according to the second embodiment differs from that of the first embodiment only in the above-described way, and the construction and operation thereof is otherwise identical to that of the first embodiment. Therefore, a detailed description thereof is omitted.

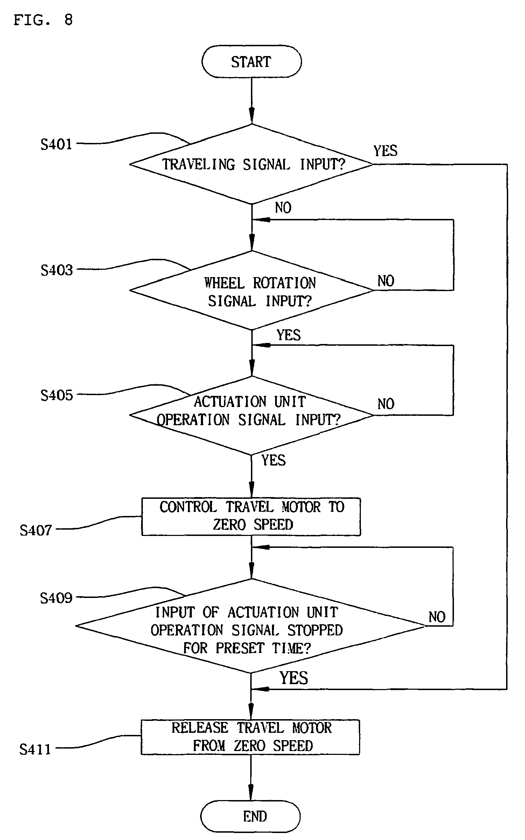

Next, a control method for an electric-powered forklift using the control system according to the second embodiment of the present invention is described with reference to FIGS. 7 and 8.

First, whether a traveling signal is input from the travel sensing means 10 is sensed at step S401. In this case, if no traveling signal is found to be input, whether a wheel rotation signal is input from the wheel rotation sensing means 60 is sensed at step S403. If a wheel rotation signal is found to be input as a result of the sensing, whether an actuation unit operation signal is input from the actuation unit sensing means 30 is sensed at step S405.

If an actuation unit operation signal is found to be input as a result of the sensing, the controller 80 determines that the vehicle currently stops traveling and is performing work while being pushed downwards in an inclined place, thus controlling the travel motor 20 so that it is in a "zero speed" state at step S407.

In this state, since the travel motor 20 is maintained in the zero speed state, the forward/backward rotation of the travel motor 20 is prevented. Accordingly, since the forward/backward rotation of the travel motor 20 is prevented, the motion of the vehicle is limited, and the braked state of the vehicle is maintained. Therefore, the vehicle is stably maintained without being pushed downwards even in an inclined place, thus the vehicle can stably perform the operation of unloading or loading goods.

Meanwhile, if a traveling signal is input from the travel sensing means 10 after the travel motor 20 has been controlled to be in the "zero speed" state at step S401, the controller 80 immediately releases the travel motor 20 from the zero speed state at step S411.

Further, the controller 80 senses whether the input of the actuation unit operation signal from the actuation unit sensing means 30 is stopped after the travel motor 20 has been controlled to be in the "zero speed" state while sensing whether the input of the actuation unit operation signal has been stopped for a preset time at step S409.

If the input of the actuation unit operation signal is found to have been stopped for the preset time as a result of the sensing, the controller 80 determines that the actuation unit is not currently being used, and thus releases the travel motor 20 from the "zero speed" state at step S411.

In this case, since the travel motor 20 is released from the "zero speed" state, the travel motor 20 can be freely rotated forward or backward, and thus travel forward or backward.

Meanwhile, if an actuation unit operation signal and a wheel rotation signal are input from the actuation unit sensing means 30 and the wheel rotation sensing means 60, respectively, after the travel motor 20 is released from the zero speed state, at steps S403 and S405, the travel motor 20 is controlled again so that it is in the "zero speed" state at step S407. Of course, even in this case, a state in which no traveling signal is input from the travel sensing means 10 must be realized.

The control method according to the second embodiment of the present invention employs a structure in which, even if the input of the actuation unit operation signal from the actuation unit sensing means 30 is stopped, the travel motor 20 is released from the "zero speed" state after the preset time has elapsed, thus preventing the vehicle from being released from a braked state even when the driver of the vehicle temporarily stops the operation of the actuation unit.

As described above, the control system and method for an electric-powered forklift according to the present invention is advantageous in that, since a travel motor is automatically maintained in a zero speed state when the vehicle stops traveling to perform work, the vehicle can be automatically braked without requiring a driver to perform a manual operation, thus maximizing the driver's convenience.

Further, the present invention is advantageous in that, when the vehicle is performing work in an inclined place, a travel motor is automatically maintained in a zero speed state to stop the vehicle, so that the vehicle can work while maintaining a stable state even in an inclined place.

## Claims

1. A control system for an electric-powered forklift, the electric-powered forklift including a travel motor (20) for driving a wheel, and an actuation unit motor for driving an actuation unit, comprising:
travel sensing means (10) for sensing a traveling operation of a driver;
an actuation unit sensing means (30) for sensing an operation of the actuation unit;
a controller (70, 80) for controlling the travel motor (20) in response to signals output from the travel sensing means (10) and the actuation unit sensing means (30), respectively, and
a wheel rotation sensing means (60) for sensing rotation of the wheel,
wherein, if the actuation unit is operated when the traveling operation is not performed, the forklift is controlled by the controller (70, 80) so that the forklift is in a zero speed state, in which actual traveling of the forklift is not allowed, **characterized in that** the controller (70, 80) is operated so that, if rotation of the wheel is sensed when the traveling operation is not performed while being pushed downwards in an inclined place, the controller (70, 80) applies reverse current to the travel motor (20) for generating a reverse rotary power corresponding to rotary power of the wheel, the reverse rotary power having any intensity enabling the forklift to be maintained in the zero speed state, and
wherein the reverse rotary power is generated in a reverse direction relative to a rotating direction of the wheel.

2. The control system according to claim 1, wherein the controller (70, 80) controls the travel motor (20), if the forklift completes traveling and stops, to be in the zero speed state for a preset time starting immediately after the traveling has been completed, even if driving of the actuation unit is not detected.

3. The control system according to any of claims 1 or 2, wherein the wheel rotation sensing means (60) is a rotation sensor for sensing rotation of an axle shaft connected to the wheel.

4. The control system according to any of claims 1 to 3, wherein the travel sensing means (10) comprises a pressure sensor for sensing that an accelerator pedal is pressed.

5. The control system according to any of claims 1 to 4, wherein the controller (80) comprises a timer (82) for counting a time starting from a time point at which the driving of the actuation unit is stopped if the driving of the actuation unit is stopped in the zero speed state, the controller (80) releasing the travel motor (20) from the zero speed state if the time counted by the timer (82) exceeds a preset time.

6. The control system according to any of claims 1 to 5, wherein the actuation unit sensing means (30) comprises a rotation sensor for sensing rotation of a shaft of the actuation unit motor.

7. A control method for an electric-powered forklift, the electric-powered forklift including a travel motor for driving a wheel, and an actuation unit motor for driving an actuation unit, comprising the steps of:
sensing input of a traveling signal corresponding to a traveling operation of a driver;
sensing input of an actuation unit operation signal corresponding to driving of the actuation unit; and
controlling the forklift so that it is in a zero speed state, in which traveling of the forklift substantially stops, comprising sensing input of a wheel rotation signal corresponding to rotation of the wheel,
**characterized in that** the zero speed control step is performed while being pushed downward in an inclined place when only the actuation unit operation signal and the wheel rotation signal is input, without the traveling signal being input and the zero speed control step comprises
applying reverse current to the travel motor for generating reversal rotary power corresponding to rotary power of the wheel, the reverse rotary power having any intensity enabling the forklift to be maintained in the zero speed state,
wherein the reversal rotary power is generated in a reverse direction relative to a rotating direction of the wheel when the wheel rotation signal is input.

8. The control method according to claim 7, further comprising the step of detecting completion of traveling of the forklift when the forklift stops,
wherein the zero speed control step is performed for a preset time starting immediately after the traveling of the forklift is completed, even if the actuation unit operation signal is not input.

9. The control method according to claim 7 or 8, wherein:
if the zero speed control step is performed by input of the actuation unit operation signal when traveling signal is not input, the zero speed control step is terminated in response to either one of new input of the traveling signal or stoppage of input of the actuation unit operation signal, and
if input of the actuation unit operation signal is stopped, the zero speed control step is terminated after a preset time has elapsed from a time point at which the driving of the actuation unit is stopped.

## Patentansprüche

1. Steuersystem für einen elektrisch angetriebenen Gabelstapler, wobei der elektrisch angetriebene Gabelstapler einen Fahrmotor (20) zum Antreiben eines Rads und einen Betätigungseinheitsmotor zum Antreiben einer Betätigungseinheit aufweist, umfassend:
Fahrabtastmittel (10) zum Abtasten einer Fahrbedienung eines Fahrers;
ein Betätigungseinheitsabtastmittel (30) zum Abtasten einer Bedienung der Betätigungseinheit;
eine Steuereinrichtung (70, 80) zum Steuern des Fahrmotors (20) als Reaktion auf Signale, die aus dem Fahrabtastmittel (10) bzw. dem Betätigungseinheitsabtastmittel (30) ausgegeben werden, und
ein Radrotationsabtastmittel (60) zum Abtasten einer Rotation des Rads, wobei, wenn die Betätigungseinheit betrieben wird, wenn die Fahrbedienung nicht durchgeführt wird, der Gabelstapler so durch die Steuereinrichtung (70, 80) gesteuert wird, dass sich der Gabelstapler in einem Nullgeschwindigkeitszustand befindet, in dem ein tatsächliches Fahren des Gabelstaplers nicht zugelassen wird, **dadurch gekennzeichnet, dass** die Steuereinrichtung (70, 80) so betrieben wird, dass wenn eine Rotation des Rads abgetastet wird, wenn die Fahrbedienung nicht durchgeführt wird, während er an einer abschüssigen Stelle nach unten gedrückt wird, die Steuereinrichtung (70, 80) einen Rückstrom an den Fahrmotor (20) zum Erzeugen einer Rückdrehkraft anlegt, die der Drehkraft des Rads entspricht, wobei die Rückdrehkraft irgendeine Stärke aufweist, die es ermöglicht, dass der Gabelstapler im Nullgeschwindigkeitszustand gehalten wird, und
wobei die Rückdrehkraft relativ zu einer Rotationsrichtung des Rads in eine Rückwärtsrichtung erzeugt wird.

2. Steuersystem nach Anspruch 1, wobei die Steuereinrichtung (70, 80) den Fahrmotor (20) so steuert, wenn der Gabelstapler das Fahren beendet und stoppt, dass er sich für eine vorgegebene Zeit, die unmittelbar beginnt, nachdem das Fahren beendet worden ist, im Nullgeschwindigkeitszustand befindet, selbst wenn kein Antreiben der Betätigungseinheit ermittelt wird.

3. Steuersystem nach einem der Ansprüche 1 oder 2, wobei das Radrotationsabtastmittel (60) ein Rotationssensor zum Abtasten der Rotation einer Achswelle ist, die mit dem Rad verbunden ist.

4. Steuersystem nach einem der Ansprüche 1 bis 3, wobei das Fahrabtastmittel (10) ein Drucksensor zum Abtasten ist, dass ein Fahrpedal gedrückt wird.

5. Steuersystem nach einem der Ansprüche 1 bis 4, wobei die Steuereinrichtung (80) einen Timer (82) zum Zählen einer Zeit umfasst, die zu einem Zeitpunkt beginnt, an dem das Antreiben der Betätigungseinheit gestoppt wird, wobei, wenn das Antreiben der Betätigungseinheit im Nullgeschwindigkeitszustand gestoppt wird, die Steuereinrichtung (80) den Fahrmotor (20) aus dem Nullgeschwindigkeitszustand freigibt, wenn die durch den Timer (82) gezählte Zeit eine vorgegebene Zeit überschreitet.

6. Steuersystem nach einem der Ansprüche 1 bis 5, wobei das Betätigungseinheitsabtastmittel (30) einen Rotationssensor zum Abtasten der Rotation einer Welle des Betätigungseinheitsmotors umfasst.

7. Steuerungsverfahren für einen elektrisch angetriebenen Gabelstapler, wobei der elektrisch angetriebene Gabelstapler einen Fahrmotor zum Antreiben eines Rads und einen Betätigungseinheitsmotor zum Antreiben eine Betätigungseinheit aufweist, das die Schritte umfasst:
Abtasten der Eingabe eines Fahrsignals, das einer Fahrbedienung eines Fahrers entspricht;
Abtasten der Eingabe eines Betätigungseinheitsbedienungssignals, das dem Antreiben der Betätigungseinheit entspricht; und
Steuern des Gabelstaplers so, dass er sich in einem Nullgeschwindigkeitszustand befindet, in dem das Fahren des Gabelstaplers im Wesentlichen stoppt, das das Abtasten der Eingabe eines Radrotationssignals umfasst, das der Rotation des Rads entspricht,
**dadurch gekennzeichnet, dass** der Nullgeschwindigkeitssteuerungsschritt durchgeführt wird, während er an einer abschüssigen Stelle nach unten gedrückt wird, wenn nur das Betätigungseinheitsbedienungssignal und das Radrotationssignal eingegeben werden, ohne dass das Fahrsignal eingegeben wird, und der Nullgeschwindigkeitssteuerungsschritt umfasst
Anlegen eines Rückstroms an den Fahrmotor zum Erzeugen einer Rückdrehkraft, die der Drehkraft des Rads entspricht, wobei die Rückdrehkraft irgendeine Stärke aufweist, die es ermöglicht, dass der Gabelstapler im Nullgeschwindigkeitszustand gehalten wird,
wobei die Rückdrehkraft relativ zu einer Rotationsrichtung des Rads in eine Rückwärtsrichtung erzeugt wird, wenn das Radrotationssignal eingegeben wird.

8. Steuerungsverfahren nach Anspruch 7, das ferner der Schritt des Ermittelns der Beendigung des Fahrens des Gabelstaplers umfasst, wenn der Gabelstapler stoppt,
wobei der Nullgeschwindigkeitssteuerungsschritt für eine vorgegebene Zeit durchgeführt wird, die unmittelbar beginnt, nachdem das Fahren des Gabelstaplers beendet worden ist, selbst wenn das Betätigungseinheitsbedienungssignal nicht eingegeben wird.

9. Steuerungsverfahren nach Anspruch 7 oder 8, wobei:
wenn der Nullgeschwindigkeitssteuerungsschritt durch die Eingabe des Betätigungseinheitsbedienungssignals durchgeführt wird, wenn das Fahrsignal nicht eingegeben wird, der Nullgeschwindigkeitssteuerungsschritt entweder als Reaktion auf eine neue Eingabe des Fahrsignals oder das Stoppen der Eingabe des Betätigungseinheitsbedienungssignals beendet wird, und
wenn die Eingabe des Betätigungseinheitsbedienungssignals gestoppt wird, der Nullgeschwindigkeitssteuerungsschritt beendet wird, nachdem eine vorgegebene Zeit von einem Zeitpunkt verstrichen ist, an dem das Antreiben der Betätigungseinheit gestoppt worden ist.

## Revendications

1. Système de commande d'un chariot élévateur à fourche électrique, le chariot élévateur à fourche électrique comprenant un moteur de déplacement (20) pour entraîner une roue, et un moteur d'unité d'actionnement pour entraîner une unité d'actionnement, comprenant:
des moyens de détection de déplacement (10) pour détecter une opération de déplacement d'un conducteur;
des moyens de détection d'une unité d'actionnement (30) pour détecter un fonctionnement de l'unité d'actionnement;
un dispositif de commande (70,80) pour commander respectivement le moteur de déplacement (20) en réponse à des signaux provenant des moyens de détection de déplacement (10) et des moyens de détection de l'unité d'actionnement (30), et
des moyens de détection de la rotation d'une roue (60) pour détecter la rotation de la roue,
dans lequel, si l'unité d'actionnement est mise en fonction lorsque l'opération de déplacement n'est pas réalisée, le chariot élévateur à fourche est commandé par le dispositif de commande (70,80) de manière que le chariot élévateur à fourche soit mis dans un état de vitesse nulle dans lequel un déplacement réel du chariot élévateur à fourche n'est pas permis, **caractérisé en ce que** le dispositif de commande (70,80) est commandé de sorte que si une rotation de la roue est détectée lorsque l'opération de déplacement n'est pas réalisée alors qu'il est poussé vers le bas dans un endroit incliné, le dispositif de commande (70,80) applique un courant inverse au moteur de déplacement (20) pour générer une puissance de rotation inverse qui correspond à la puissance de rotation de la roue, la puissance de rotation inverse ayant toute intensité permettant au chariot élévateur à fourche d'être maintenu dans un état de vitesse nulle, et
dans lequel la puissance de rotation inverse est générée dans une direction opposée par rapport à la direction de rotation de la roue.

2. Système de commande selon la revendication 1, dans lequel le dispositif de commande (70, 80) commande le moteur de déplacement (20), si le chariot élévateur à fourche termine son déplacement et s'arrête pour être dans l'état de vitesse nulle pour un temps prédéterminé commençant immédiatement après que le déplacement ait été terminé, même si l'entraînement de l'unité d'actionnement n'est pas détecté.

3. Système de commande selon l'une quelconque des revendications 1 ou 2, dans lequel les moyens de détection (60) de rotation de la roue sont un capteur de rotation destiné à détecter la rotation d'un arbre d'essieu relié à la roue.

4. Système de commande selon l'une quelconque des revendications 1 à 3, dans lequel les moyens de détection de déplacement (10) comprennent un détecteur de pression pour détecter une pression sur une pédale d'accélérateur.

5. système de commande selon l'une des revendications 1 à 4, dans lequel le dispositif de commande (80) comprend un temporisateur (82) pour compter un temps démarrant à partir d'un instant où l'entraînement de l'unité d'actionnement est arrêté si l'entraînement de l'unité d'actionnement est arrêté dans l'état de vitesse nulle, le dispositif de commande (80) libérant le moteur de déplacement (20) à partir de l'état de vitesse nulle si le temps compté par le temporisateur (82) dépasse un temps prédéterminé.

6. Système de commande selon l'une des revendications 1 à 5, dans lequel les moyens de détection (30) de l'unité d'actionnement comprennent un détecteur de rotation pour détecter la rotation d'un arbre du moteur d'unité d'actionnement.

7. Procédé de commande d'un chariot élévateur à fourche électrique, le chariot élévateur à fourche électrique comprenant un moteur de déplacement pour entraîner une roue, et un moteur d'unité d'actionnement pour entraîner une unité d'actionnement comprenant les étapes de:
détecter une entrée d'un signal de déplacement correspondant à une opération de déplacement d'un conducteur ;
détecter une entrée d'un signal de fonctionnement d'une unité d'actionnement correspondant à l'entraînement de l'unité d'actionnement ; et
commander le chariot élévateur à fourche de manière à ce qu'il soit dans un état de vitesse nulle, dans lequel le déplacement du chariot élévateur à fourche s'arrête sensiblement, comprenant la détection de l'entrée d'un signal de rotation de la roue correspondant à la rotation de la roue,
**caractérisé en ce que** l'étape de commande de vitesse nulle est réalisée tout en étant poussé vers le bas dans un endroit incliné que lorsque le signal de fonctionnement de l'unité d'actionnement et le signal de rotation de la roue sont en entrée, sans que le signal de déplacement soit entré et l'étape de commande de vitesse nulle comprend:
l'application d'un courant inverse au moteur de déplacement pour générer une puissance de rotation inverse correspondant à une puissance de rotation de la roue, la puissance de rotation inverse ayant toute intensité quelconque permettant au chariot élévateur à fourche d'être maintenu dans son état de vitesse nulle
dans lequel la puissance de rotation inverse est générée dans une direction opposée par rapport à la direction de rotation de la roue lorsque le signal de rotation de la roue est fourni.

8. Procédé de commande selon la revendication 7, comprenant en outre l'étape de détection de l'achèvement du déplacement du chariot élévateur à fourche quand le chariot élévateur à fourche s'arrête,
dans lequel l'étape de commande de la vitesse nulle est réalisée pour un temps prédéterminé commençant immédiatement après l'achèvement du déplacement du chariot élévateur à fourche ait été terminé, même si le signal de fonctionnement de l'unité d'actionnement n'est pas fourni.

9. Procédé de commande selon la revendication 7 ou 8 dans lequel:
si l'étape de commande de la vitesse nulle est réalisée par la fourniture du signal de fonctionnement de l'unité d'actionnement quand le signal de déplacement n'est pas fourni, l'étape de commande de la vitesse nulle est terminée en réponse, soit à une nouvelle entrée d'un signal de déplacement, soit à un arrêt de la fourniture du signal de fonctionnement de l'unité d'entraînement, et
si la fourniture du signal de fonctionnement de l'unité d'actionnement est arrêtée, l'étape de commande de vitesse nulle est terminée après l'écoulement d'un temps prédéterminé à partir d'un instant auquel l'entraînement de l'unité d'actionnement est arrêté.
